# EUROPEAN PATENT APPLICATION

(11) **EP 0 647 073 A1**
(43) Date of publication of application: **05.04.1995**
(21) Application number: 94202504.0
(22) Date of filing: 01.09.1994
(51) Int. Cl.: H04Q 3/68, H04Q 3/00, H04Q 11/00, H04Q 11/04

(54) **Telecommunication network comprising simplified nodes**

(30) Priority: 06.09.1993 BE 9300913
(71) Applicant: PHILIPS ELECTRONICS N.V., 5621 BA Eindhoven (NL)
(72) Inventor: Depovere, Geert Florimond Gerard, NL-5656 AA Eindhoven (NL); Hooijmans, Pieter Werner, NL-5656 AA Eindhoven (NL)
(74) Representative: De Jongh, Cornelis Dominicus

(57) **Abstract**

In a telecommunication network comprising a plurality of nodes (1, 2, 3, 4, 5), these nodes are connected **via** a plurality of transmission channels (6, ..., 17). These transmission channels comprise a plurality of sub-channels.

Splitting up a transmission channel into a number of sub-channels may be effected by means of time-division multiplexing, frequency-division multiplexing and space-division multiplexing.

To reduce the complexity of the switching means (20) in the nodes, each sub-channel coming from a node is connected to each of the outgoing transmission channels. As a result, the number of switching elements is reduced by a factor equal to the number of outgoing transmission channels.

## Description

The invention relates to a telecommunication network comprising at least three nodes, at least one transmitting node being coupled to at least two other nodes *via* outgoing transmission channels which comprise a plurality of sub-channels, the transmitting node comprising switching means for selectively switching sub-signals carried by sub-channels of incoming transmission channels to coupling means, which coupling means are arranged for supplying the sub-signals switched through to the coupling means by the switching means to sub-channels of the outgoing transmission channels.

The invention likewise relates to a node to be used in such a telecommunication network. A telecommunication network of this type is known from EP 429046 A2.

Telecommunication networks as defined in the opening paragraph are used, for example, for transmitting higher-order trunk signals between telephone exchanges. The more the number of broadband services to users increase, the more the importance of trunk networks will be enhanced. Current trunk networks are usually arranged for a fixed transmission capacity between certain nodes, whilst reconfigurations of the network are to be carried out manually. This manual reconfiguration is very time-consuming, so that the network manager is incapable of reacting fast to a temporary shift of additionally required transmission capacity in certain areas of the telecommunication network.

In future telecommunication networks new network elements such as, for example, cross-connects will be introduced by which it is possible to reconfigure the network under the control of a network management system in a very short period of time.

The transmission channels are often used in multiplexed mode, so that the transmission channel is subdivided into a number of sub-channels. This subdivision of a transmission channel may be effected, for example, by frequency-division multiplexing (wavelength-division multiplexing), time-division multiplexing or space-division multiplexing.

If it is assumed that each transmission channel comprises N sub-channels and M incoming and M outgoing transmission channels are connected to the node, N².M² switching elements are necessary for applying each sub-signal in a sub-channel to an arbitrary sub-channel of another transmission channel. In the telecommunication network known from said Patent application the switching means comprise optical switch elements and wavelength-division multiplexing is used for subdividing the transmission channels into sub-channels. Each node of the known telecommunication network comprises N².M² wavelength converters for converting the wavelength of the signal in a sub-channel to a desired wavelength for the signal that is applied to another sub-channel. Due to the required large number of switch elements and wavelength converters, a node for the known telecommunication network is rather complicated and thus rather expensive.

It is an object of the invention to provide a telecommunication network as defined in the opening paragraph of which the complexity is reduced considerably without this being at a cost of the connection possibilities between various nodes.

For this purpose, the invention is characterized in that the coupling means are arranged for supplying to a sub-channel of at least two of the outgoing transmission channels a sub-signal switched to the coupling means by the switching means.

For example, if each sub-signal switched through is fed to a sub-channel of two transmission channels, the number of necessary switch elements is reduced by a factor of 2. The reduction of the number of switch elements does not lead to diminished connection possibilities, because now two other nodes may be simultaneously reached *via* a single switch element.

An embodiment of the invention is characterized in that the coupling means are arranged for supplying the sub-signals switched by the switching means to a sub-channel of each of the outgoing transmission channels.

If a sub-signal switched through to the coupling means by the switch elements is supplied to a sub-channel of each of the transmission channels, the number of necessary switch elements is reduced further. If each sub-signal switched through to the coupling means by the switch elements is supplied to a sub-channel of each transmission channel, the number of necessary switch elements is reduced by a factor of M, so that not more than N²M switch elements are necessary. It is noted that this number N² may be further reduced by applying multistage switching means known *per se*, such as, for example, Cloche structures.

A further embodiment of the invention is characterized in that the switching means comprise transforming means for transforming the value of the multiplex quantity of at least a sub-signal switched to the coupling means by the switching means into another value of the multiplex quantity, so that the value of the multiplex quantity of all the sub-signals switched through to the coupling means by the switching means is different.

The multiplex quantity denotes the position of a signal in a multiplex domain. In frequency-division multiplexing the multiplex quantity is the frequency of the sub-signal in a sub-channel. In time-division multiplexing the multiplex quantity is the number of a time slot in a frame in which frame a sub-signal is accommodated. In coherence multiplexing the multiplex quantity is the delay between two components of the sub-signal.

In the case of frequency-division multiplexing the transforming means are there to make it possible to supply a sub-signal having a signal frequency fᵢ to a sub-channel arranged for a signal frequency fⱼ. The transforming means may be arranged as a cascade circuit of a tunable receiver and a transmitter which transmitter has a fixed output frequency or as a cascade circuit of a receiver which has a fixed tuning frequency and a tunable receiver. In both situations the transmit signal is demodulated to a baseband signal in the receiver. It is alternatively possible that a frequency conversion takes place without demodulation, for example, by mixing the signal to be converted having a reference frequency.

A further embodiment of the invention is characterized in that the coupling means comprise a coupling element for combining sub-signals switched by the switching means to a combined signal and for splitting the combined signal to obtain input signals for the outgoing transmission channels.

A simple manner of supplying to the sub-channels of the transmission channels the sub-signals switched through to the coupling means is combining the subsignals to a combined signal and thereafter splitting up the combined signal into a number of components (which may be the same) which are supplied to sub-channels of the transmission channels.

The invention will now be further explained with reference to the drawing Figures in which:
Fig. 1 shows a telecommunication network comprising a plurality of nodes;
Fig. 2 shows a node to be used in a telecommunication network according to the invention in which space-division multiplexing is used;
Fig. 3 shows a node to be used in a telecommunication network according to the invention in which time-division multiplexing is used;
Fig. 4 shows a node to be used in an optical telecommunication network in which frequency-division multiplexing is used; and
Fig. 5 shows transforming means to be used in the node shown in Fig. 4.

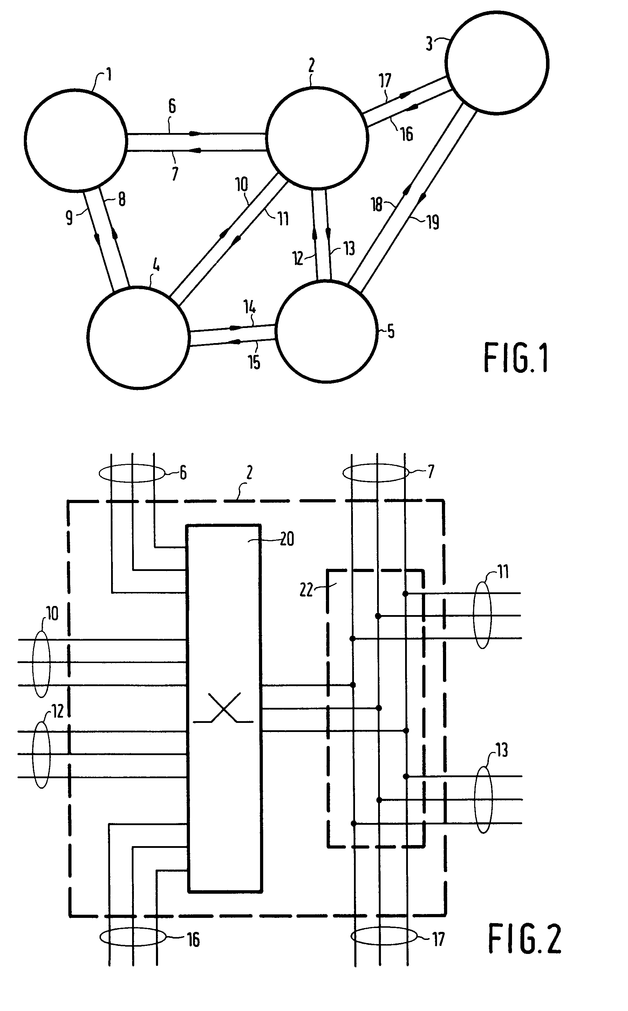

In the telecommunication network shown in Fig. 1 a node 1 is coupled to a node 2 *via* an outgoing transmission channel 6 and an incoming transmission channel 7. The node 1 is coupled to a node 4 *via* an outgoing transmission channel 9 and an incoming transmission channel 8. The node 4 is connected to the node 2 *via* an outgoing transmission channel 10 and an incoming transmission channel 11. The node 4 is furthermore coupled to a node 5 *via* an outgoing transmission channel 14 and an incoming transmission channel 15. The node 5 is coupled to the node 2 *via* an outgoing transmission channel 12 and an incoming transmission channel 13. The node 2 is furthermore coupled to a node 3 *via* an outgoing transmission channel 17 and an incoming transmission channel 16. The node 3 is additionally coupled to the node 5 *via* an outgoing transmission channel 19 and an incoming transmission channel 18.

The telecommunication network as shown in Fig. 1 is arranged such that each node can be reached from another node *via* at least two channels. As a result, it is possible to couple a first and a second node *via* a third node if a direct connection between the first and the second node breaks down. In the event of a breakdown of the transmission channels 10 and/or 11, the node 4 can be coupled to the node 2 *via* the node 1 and *via* the node 5. As will be explained hereinafter, there is limited additional complexity to be incorporated in the nodes according to the invention to realise this "protection switching".

In the node shown in Fig. 2 the outputs of sub-channels of the transmission channel 6 are connected to inputs of the switching means 20. The outputs of three sub-channels of the transmission channel 10 are connected to three inputs of the switching means 20. The outputs of the sub-channels of the transmission channels 12 and 16 are also connected to inputs of the switching means 20.

Each of the three outputs of the switching means 20 is connected to a sub-channel of the transmission channels 7, 11, 13 and 17.

The switching means 20 are arranged for switching through three of the twelve inputs to the three outputs of these switching means. Since the switching means are capable of coupling each of the inputs which each of the outputs, the node can be configured.

The three sub-signals on the three outputs of the switching means 20 are coupled to a sub-channel of each transmission channel, so that the same information is transmitted through each sub-channel. Which input of the switching means 20 is connected to which output of the switching means 20 is determined by a network management system. In SDH transmission networks the control information for setting the switching means may be transmitted *via* the non-standardized bits of the Section Overhead in an STM- 1 frame. The Table below shows the use of sub-channels for a network shown in Fig. 1. There is assumed that a maximum of 5 sub-channels are available in this network.

**TABLE 1**

| | sub-channel | | | | |
|---|---|---|---|---|---|
| node | 1 | 2 | 3 | 4 | 5 |
| 1 | 1→3 | 1→4 | 1→5 | | |
| 2 | 1→3 | 1→5 | 3→1 | 5→1 | 4→3 |
| 3 | 3→1 | 3→4 | 3→5 | | |
| 4 | 4→1 | 4→3 | 4→5 | | |
| 5 | 5→1 | 5→3 | 5→4 | 3→4 | |
| The connotation of x → y is that the sub-channel involved is used for signal transport from node x to node y. | | | | | |

In the situation described by above Table there is assumed which there is a local exchange in the nodes 1, 3, 4 and 5 that supplies signals to each of the exchanges in the other nodes. In addition, there is assumed that no local exchange is present in node 2.

The Table shows that the traffic from node 1 to node 3 and *vice versa* is effected *via* node 2. For this purpose, sub-channel 1 is used in nodes 1 and 2. The traffic from node 1 to node 5 is also effected *via* node 2 for which purpose sub-channel 3 is used. The traffic from node 3 to node 4 is effected *via* node 5 (sub-channel 4), whereas the traffic from node 4 to node 3 is effected *via* node 2 (sub-channel 5). Mutual traffic between the other nodes is effected *via* the direct lines in these nodes.

There is observed that the nodes 1, 3, 4 and 5 may be arranged similarly to the node shown in Fig. 2. However, one of the incoming transmission channels and one of the outgoing transmission channels are then coupled to the local exchange.

In the Table 2 below there is a possible routing of the traffic between the various nodes for the case where the transmission channels between nodes 2 and 5 have broken down.

**TABLE 2**

| | sub-channel | | | | |
|---|---|---|---|---|---|
| node | 1 | 2 | 3 | 4 | 5 |
| 1 | 1→3 | 1→4 | 1→5 | | |
| 2 | 1→3 | | 3→1 | | 4→3 |
| 3 | 3→1 | 3→4 | 3→5 | | |
| 4 | 4→1 | 4→3 | 4→5 | 5→1 | 1→5 |
| 5 | 5→1 | 5→3 | 5→4 | 3→4 | |

The traffic from node 1 to node 5 and *vice versa* is now effected *via* node 4 *in lieu of via* node 2. For this purpose, two additional auxiliary channels are put into use in node 4. This is done by switching the sub-signal coming from node 1 destined for node 5 through to an input of a sub-channel of transmission channel 14. The sub-signal involved is already available on an input of the switching means as a result of the implementation of the measures according to the invention. The same holds for the sub-signal coming from node 5 and destined for node 1. Since, according to the inventive proposals, the sub-signals are applied to all the outgoing transmission channels of a node, a large number of the sub-signals are already available in various nodes. As a result, measures for network reconfiguration need to be taken only in several nodes (switching over of sub-channels).

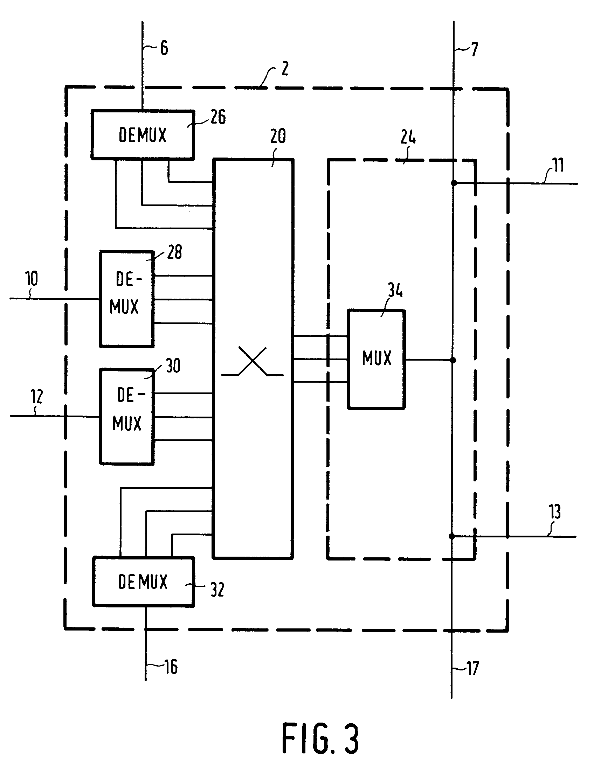

In the node 2 shown in Fig. 3 transmission channels 6, 10, 12 and 16 are connected to an input of a respective demultiplexer 26, 28, 30 and 32. The outputs of the demultiplexers 26, 28, 30 and 32 are connected to inputs of switching means 20. The outputs of the switching means 20 are connected to inputs of the coupling means 24. The coupling means 24 comprise a multiplexer 34 which is supplied with the input signals of the coupling means. The output of the multiplexer 34 is connected to an input of the transmission channels 7, 11, 13 and 17.

The node 2 shown in Fig. 3 is arranged for transmission channels being used in the time-division multiplex mode. In this mode the sub-channels are formed by time slots in a periodic frame. The demultiplexers 26, 28, 30 and 32 convert the multiplexed output signal of the transmission channels 6, 10, 12 and 16 into sub-channels which are present each on a separate output of the multiplexer. The switching means 20 switch three of the input signals of the switching means 20 through to three of its outputs. The multiplexer 34 combines the sub-signals available on the outputs of the switching means 20 to a multiplexed signal which is applied to the transmission channels 7, 11, 13 and 17.

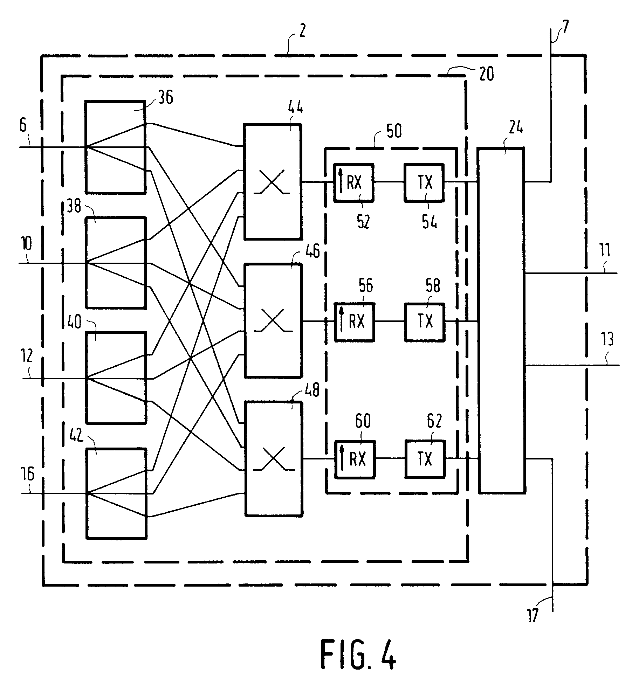

In the node 2 shown in Fig. 4 an output of the transmission channel 6 is connected to a first input of the switching means 20. In the switching means 20 this first input is connected to an input of a power divider 36. A first output of the power divider 36 is connected to a first input of a switching element 44. A second output of the power divider 36 is connected to a first input of a switching element 46, whereas a third output of the power divider 36 is connected to the first input of a switching element 48.

The output of the transmission channel 10 is connected to a second input of the switching means 20. In the switching means 20 this input is connected to an input of a power divider 38. A first output of the power divider 38 is connected to a second input of the switching element 44. A second output of the power divider 38 is connected to a second input of the switching element 46, whilst a third output of the power divider 38 is connected to a second input of the switching element 48.

The output of the transmission channel 12 is connected to a third input of the switching means 20. In the switching means 20 this input is connected to an input of a power divider 40. A first output of a power divider 40 is connected to a third input of the switching element 44. A second output of the power divider 40 is connected to a third input of the switching element 46, whilst a third output of the power divider 40 is connected to a third input of the switching element 48.

The output of the transmission channel 16 is connected to a fourth input of the switching means 20. In the switching means 20 this input is connected to an input of a power divider 42. A first output of the power divider 42 is connected to a fourth input of the switching element 44. A second output of the power divider 42 is connected to a fourth input of the switching element 46, whereas a third output of the power divider is connected to a fourth input of the switching element 48.

The output of the switching element 44 is connected to a first input of the transforming means 50. The output of the switching element 46 is connected to a second input of the transforming means 50 and the output of the switching element 48 is connected to a third input of the transforming means 50. In the transforming means 50 the first input is connected to an input of a tunable receiver 52. An output of the tunable receiver 52 is connected to an input of a transmitter 54. The output of the transmitter 54 forms a first output of the transforming means 50.

A second input of the transforming means 50 is connected to an input of a tunable receiver 56. An output of the tunable receiver 56 is connected to an input of a transmitter 58. The output of the transmitter 58 forms a second output of the transforming means 50.

A third input of the transforming means 50 is connected to an input of a tunable receiver 60. The output of the tunable receiver 60 is connected to an input of a transmitter 62. The output of the transmitter 62 forms the third output of the transforming means 50.

The three outputs of the transforming means 50 are connected to three inputs of the coupling means 24. Four outputs of the coupling means 24 are connected to the transmission channels 7, 11, 13 and 17.

The node 2 shown in Fig. 4 is arranged to be used with transmission channels utilizing optical frequency-division multiplexing. In the example shown in Fig. 4 the transmission channels (glass fibres) are assumed to include three optical sub-channels, the optical sub-signals being represented by light signals having different frequencies.

The power dividers 36, 38, 40 and 42 divide the signal coming from the respective transmission channels 6, 10, 12 and 16 into three portions. These three portions are fed each to an input of one of these switching elements 44, 46 and 48. The switching elements 44, 46 and 48 can select one of their inputs and switch it through to their output.

Now it is possible that three of the four transmission channels are switched through, as selected, to the outputs of the switching elements 44, 46 and 48. Alternatively, however, it is possible that a specific transmission channel is switched through to outputs of more than one of the switching elements 44, 46 and 48.

The transforming means 50 select a sub-channel from each of the outputs of the switching elements 44, 46 and 48 and transform this sub-channel, as required, to another sub-channel. In the transforming means 50 a sub-channel is selected by means of the tunable receiver 52, 56 and 60. The output signal of these receivers is reconverted by transmitters 54, 58 and 62 into sub-signals whose frequencies are different. It is likewise conceivable for the receivers 52, 56 and 58 not to be tunable, but to be tuned each to a fixed frequency belonging to one of the sub-channels, but the transmitter is tunable then. It is alternatively possible that both the receivers 52, 56 and 58 and the transmitters 54, 58 and 62 are tunable.

The output signals of the transmitters 54, 56 and 62, which output signals likewise form the outputs of the switching means 20, are combined to a combined light signal in the coupling means 24. These coupling means 24 split up this combined light signal into four portions of either equal power or not which are fed to the transmission channels 7, 11, 13 and 17.

The node 2 is capable of selecting, in the manner described above, three sub-channels from the twelve sub-channels of the four transmission channels 6, 10, 12 and 16 and combine them to a signal formed by sub-signals and fed to the transmission channels 7, 11, 13 and 17.

By the measures according to the inventive idea the node shown in Fig. 4 only needs to have only three switching elements 44, 46 and 48. In a node according to the state of the art each of the transmission channels 7, 11, 13 and 17 would need three switching elements, which is a total of twelve switching elements. It is noted that the number of incoming transmission channels need not always be equal to the number of outgoing transmission channels. For example, in transmission networks utilized for transporting broadcast signals such as, for example, digital television signals, this will not always be the case.

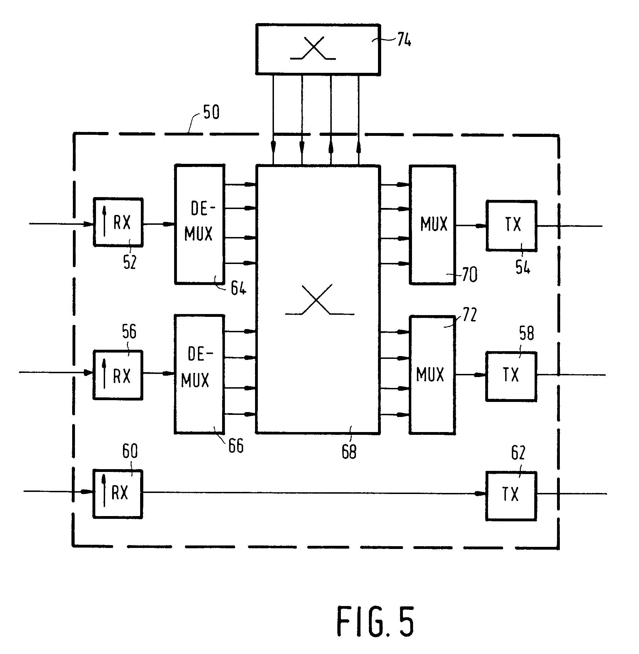

In the transforming means 50 shown in Fig. 5 a first input is connected to a tunable receiver 52 and a second input is connected to a tunable receiver 56. The output of the tunable receiver 52 is connected to an input of a demultiplexer 64, whereas the output of the tunable receiver 56 is connected to an input of a demultiplexer 66. Four outputs of the demultiplexer 64 are connected to four other inputs of a switching network 68. Four outputs of the demultiplexer 66 are likewise connected to four inputs of the switching element 68.

Two outputs of a local exchange 74 are connected to two inputs of the switching network 68. Four outputs of the switching network 68 are connected to four inputs of a multiplexer 70. Four further outputs of the switching network 68 are connected to four inputs of a multiplexer 72. Two further outputs of the switching network 68 are connected to two inputs of the local exchange 74.

An output of the multiplexer 70 is connected to an input of an optical transmitter 54, whereas an output of the multiplexer 72 is connected to an input of an optical transmitter 58. The outputs of the optical transmitters 54 and 58 at the same time form two outputs of the transforming means 50.

A third input of the transforming means 50 is connected to a tunable optical receiver 60. The tunable optical receiver is connected to an input of an optical transmitter 62. The output of the optical transmitter 62 is connected to an output of the transforming means 50.

The transforming means 50 are arranged for transforming the frequency of sub-signals, which in their turn comprise a number of secondary signals, from a first to a second frequency. In addition, the transforming means 50 are capable of moving secondary signals of a sub-signal to another sub-signal or mutually exchanging two subsignals. A sub-signal may be, for example, an STM-4 signal from the Synchronous Digital Hierarchy (SDH) having a transmission rate of 622 Mbit/sec, whereas a secondary signal may be, for example, an STM-1 signal having a transmission rate of 155 Mbit/sec. The demultiplexer 64 subdivides the sub-signal to be received by the optical receiver 52 into four secondary signals, whereas the demultiplexer 66 subdivides the sub-signal received by the optical receiver 56 into four further secondary signals.

The switching network 68 connects ten sub-channels on its input (four from the demultiplexer 64, four from the demultiplexer 66 and two from the local exchange 74) to ten sub-channels on its output (four from multiplexer 70, four from multiplexer 72 and two from the local exchange 74). It is noted that it is possible to use a switching network 68 which is capable of switching through complete sub-channels such as an STM-4 signal. In that case a complete sub-signal is applied to the exchange 74 and the exchange 74 also applies a complete sub-signal to the switching means 68. The demultiplexers 64 and 66 and the multiplexers 70 and 72 are then no longer necessary.

In this manner it is possible to transport sub-signals from the transmission network to a local exchange and *vice versa*. The sub-signal on the output of the multiplexer 70 is reconverted by the transmitter 54 into an optical sub-signal. The sub-signal of the output of the multiplexer 72 is converted into an optical sub-signal by the transmitter 58.

The optical sub-signal on the input of the tunable receiver 60 is converted into an electric signal. This electric signal is reconverted by the transmitter 62 into an optical sub-signal which is transmitted along through the transmission network.

## Claims

1. Telecommunication network comprising at least three nodes, at least one transmitting node being coupled to at least two other nodes *via* outgoing transmission channels which comprise a plurality of sub-channels, the transmitting node comprising switching means for selectively switching sub-signals carried by sub-channels of incoming transmission channels to coupling means, which coupling means are arranged for supplying the sub-signals switched through to the coupling means by the switching means to sub-channels of the outgoing transmission channels, characterized in that the coupling means are arranged for supplying to a sub-channel of at least two of the outgoing transmission channels a sub-signal switched to the coupling means by the switching means.

2. Telecommunication network as claimed in Claim 1, characterized in that the coupling means are arranged for supplying the sub-signals switched by the switching means to a sub-channel of each of the outgoing transmission channels.

3. Telecommunication network as claimed in Claim 1 or 2, characterized in that the switching means comprise transforming means for transforming the value of the multiplex quantity of at least a sub-signal switched to the coupling means by the switching means into another value of the multiplex quantity, so that the value of the multiplex quantity of all the sub-signals switched through to the coupling means by the switching means is different.

4. Telecommunication network as claimed in Claim 3, characterized in that the coupling means comprise a coupling element for combining sub-signals switched by the switching means to a combined signal and for splitting the combined signal to obtain input signals for the outgoing transmission channels.

5. Telecommunication network as claimed in one of the preceding Claims, characterized in that the transmission channel comprises an optical transmission channel, in that the switching means comprise optical switching means and in that the coupling element comprises an optical coupling element.

6. Node comprising switching means for switching through sub-signals carried by sub-channels of incoming transmission channels to coupling means, these coupling means being arranged for feeding to sub-channels of a number of outgoing transmission channels sub-signals switched by the switching means, characterized in that the coupling means are arranged for feeding a sub-channel switched by the switching means to a sub-channel of at least two different outgoing transmission channels.

7. Node as claimed in Claim 6, characterized in that the coupling means are arranged for feeding to a sub-channel of each of the transmission channels sub-channels switched to the coupling means by the switching means.

8. Node as claimed in Claim 1 or 2, characterized in that the switching means comprise transforming means for transforming the value of the multiplex quantity of at least a sub-signal switched to the coupling means by the switching means into another value of the multiplex quantity, so that the value of the multiplex quantity of all the sub-signals switched to the coupling means by the switching means is different.

9. Node as claimed in Claim 8, characterized in that the coupling means comprise a coupling element for combining to a combined signal sub-signals switched to the coupling means by the switching means and for splitting up the combined signal to obtain the input signals for the transmission channels.

10. Node as claimed in one of the Claims 6 to 9, characterized in that the transmission channel comprises an optical transmission channel, in that the switching means comprise optical switching means and in that the coupling element comprises an optical coupling element.
